# EUROPÄISCHE PATENTANMELDUNG

(11) **EP 2 164 035 A1**
(43) Veröffentlichungstag der Anmeldung: **17.03.2010**
(21) Anmeldenummer: 08015680.5
(22) Anmeldetag: 05.09.2008
(51) Int. Cl.: G06Q 30/00, H04L 29/00

(54) **Verfahren und Anordnung zur Anonymisierung von personenbezogenen Daten**

(71) Anmelder: Wunderloop media services Gmbh, 20099 Hamburg (DE)
(72) Erfinder: Bauer, Christoph, Dr., 20099 Hamburg (DE); Hegge, Ulrich, 20099 Hamburg (DE); Conrad, Frank, 20099 Hamburg (DE)
(74) Vertreter: Glawe, Delfs, Moll

(57) **Zusammenfassung**

Ein Verfahren zur Gewinnung von anonymisierten Benutzermerkmalen (80) für einen zweiten Anbieter aus personenbezogenen Registrierungsdaten (70) bei einem ersten Anbieter in einem Computernetzwerk, zeichnet sich durch die folgenden Schritte aus:
a) Ein Server (2) des ersten Anbieters empfängt von einem Nutzer an einem Client (1) erstellten personenbezogenen Registrieungsdaten (70) zusammen mit der Adresse (11) des Clients (1);
b) Die personenbezogenen Registrierungsdaten (70) werden durch eine erste Anonymisierungseinheit (3) eines weiteren Anbieters von der Adresse (11) des Clients (1) getrennt;
c) Die personenbezogenen Registrierungsdaten (70) werden durch eine Profilanonymisierungseinheit (4) eines weiteren Anbieters in anonymisierte Benutzermerkmale (80) gewandelt;
d) Die anonymisierten Benutzermerkmale (80) werden durch die erste Anonymisierungseinheit (3) der Adresse (11) des Clients (1) zugeordnet;
e) Die anonymisierten Benutzermerkmale (80) werden durch eine zweite Anonymisierungseinheit (5) eines weiteren Anbieters von der Adresse (11) des Clients (1) getrennt;
f) Die anonymisierten Benutzermerkmale (80) werden auf einem Server (6) des zweiten Anbieters zusammen mit einer ID gespeichert; und
g) Ein aus der ID generierter Cookie (90) wird durch die zweite Anonymisierungseinheit (5) der Adresse (11) des Clients (1) zugeordnet, an den Client (1) gesendet und dort abgespeichert.

## Beschreibung

Die Erfindung betrifft ein Verfahren zur Anonymisierung von personenbezogenen Datensätzen in einem Computernetzwerk. Außerdem betrifft sie eine Anordnung zur Durchführung des erfindungsgemäßen Verfahrens.

In Computernetzwerken, insbesondere dem Internet, werden kostenfreie und kostenpflichtige Dienste angeboten, für die sich ein Nutzer registrieren muss. Dabei kann es erforderlich sein, dass der Nutzer während der Registrierung personenbezogene Daten, wie z. B. Namen, Anschrift und/oder Geburtsdatum, preisgibt, um sich erfolgreich bei dem Dienst registrieren und/oder diesen in vollem Umfang nutzen zu können. Der Anbieter eines solchen Dienstes erhält für jeden registrierten Nutzer einen Datensatz mit personenbezogenen Registrierungsdaten, die neben den personenbezogenen Daten auch weitere Daten, wie z. B. über Interessen, enthalten können.

Im Internet sind weiterhin Anbieter vertreten, die benutzerspezifische Werbung auf von Nutzern abgerufenen Internetseiten platzieren, im Folgenden vereinfachend "Anbieter von Internetwerbung" genannt. Durch den Begriff "Werbung" bzw. "Internetwerbung" werden auch Produktempfehlungen oder sonstige redaktionelle Inhalte erfasst. Die genannten Anbieter versuchen aufgrund des Nutzerverhaltens die Interessen eines Nutzers zu ermitteln, um so dem Nutzer nur solche Werbung zu präsentieren, die für ihn interessant sein könnte. Indem eine Werbung nur Nutzern präsentiert wird, bei denen eine hohe Akzeptanz erwartet werden kann, werden Streuverluste vermindert, die entstehen, wenn Werbung auch Nichtinteressierten präsentiert wird. Das Interessenprofil eines Nutzers kann durch sein Verhalten und/oder z. B. durch anonyme Umfragen erstellt werden. Die anonymen Umfragen können dabei auch von Drittanbietern durchgeführt werden, die die Ergebnisse dann dem Anbieter von Internetwerbung zur Verfügung stellen. Die Teilnahmequote bei solchen Umfragen ist eher gering.

Deutlich höher ist die Quote derer, die sich bei registrierungspflichtigen Diensten im Internet anmelden. Allerdings können die bei der Registrierung erhobenen Datensätze mit personenbezogenen Registrierungsdaten aus Datenschutzgründen nicht von Anbietern von Internetwerbung genutzt werden.

Der Erfindung liegt die Aufgabe zugrunde, personenbezogene, bei der Registrierung für einen Dienst im Internet erhobene Registrierungsdaten für den Anbieter von Internetwerbung verfügbar zu machen, ohne gegen Datenschutzrichtlinien zu verstoßen.

Gelöst wird diese Aufgabe durch das Verfahren gemäß dem Hauptanspruch.

Demnach ist ein Verfahren zur Gewinnung von anonymisierten Benutzermerkmalen für einen zweiten Anbieter aus personenbezogenen Registrierungsdaten bei einem ersten Anbieter in einem Computernetzwerk vorgesehen, dass die folgenden Schritte umfasst:
a) ein Server des ersten Anbieters empfängt von einem Nutzer an einem Client erstellte personenbezogenen Registrierungsdaten zusammen mit der Adresse des Clients;
b) die personenbezogenen Registrierungsdaten werden durch eine erste Anonymisierungseinheit eines weiteren Anbieters von der Adresse des Clients getrennt;
c) die personenbezogenen Registrierungsdaten werden durch eine Profilanonymisierungseinheit eines weiteren Anbieters in anonymisierte Benutzermerkmale gewandelt;
d) die anonymisierten Benutzermerkmale werden durch die erste Anonymisierungseinheit der Adresse des Clients zugeordnet;
e) die anonymisierten Benutzermerkmale werden durch eine zweite Anonymisierungseinheit eines weiteren Anbieters von der Adresse des Clients getrennt;
f) die anonymisierten Benutzermerkmale werden auf einem Server des zweiten Anbieters zusammen mit einer ID gespeichert; und
g) ein aus der ID generierter Cookie wird durch die zweite Anonymisierungseinheit der Adresse des Clients zugeordnet, an den Client gesendet und dort abgespeichert.

Eine zur Lösung der Aufgabe und zur Durchführung des genannten Verfahrens geeignete Anordnung ist Gegenstand des unabhängigen Anspruchs.

Demnach ist eine Anordnung zur Gewinnung von anonymisierten Benutzermerkmalen für einen zweiten Anbieter aus personenbezogenen Registrierungsdaten bei einem ersten Anbieter in einem Computernetzwerk vorgesehen, die einen Client, einen Server des ersten Anbieters, wenigstens eine Anonymisierungseinheit wenigstens eines weiteren Anbieters, eine Profilanonymisierungseinheit, und einen Server des zweiten Anbieters umfasst, die über ein Computernetzwerk miteinander verbunden sind, wobei:
a) der Server des ersten Anbieters zum Empfang von einem Nutzer an einem Client erstellten personenbezogenen Registrierungsdaten zusammen mit der Adresse des Clients ausgebildet ist;
b) die wenigstens eine Anonymisierungseinheit zur Trennung der personenbezogenen Registrierungsdaten von der Adresse des Clients und zur späteren Zuordnung der aus den personenbezogenen Registrierungsdaten erzeugten anonymisierten Benutzermerkmalen zur Adresse des Clients ausgebildet ist;
c) die Profilanonymisierungseinheit zur Umwandlung der personenbezogenen Registrierungsdaten in anonymisierte Benutzermerkmale ausgebildet ist;
d) die wenigstens eine Anonymisierungseinheit zur Trennung der anonymisierten Benutzermerkmale von der Adresse des Clients zur späteren Zuordnung eines den anonymisierten Nutzermerkmalen zugeordneten Cookies mit einer ID zur Adresse des Clients ausgebildet ist;
e) der Server des zweiten Anbieters zur Speicherung der anonymisierten Benutzermerkmale und der Zuordnung eines Cookies mit einer ID ausgebildet ist; und
f) der Client zur Eingabe personenbezogener Registrierungsdaten und zum Speichern und Senden von Cookies ausgebildet ist.

Aus Gründen der Übersichtlichkeit und dem besseren Verständnis wird im Folgenden das Computernetzwerk in der Ausgestaltung des Internets beschrieben und die diesbezügliche Terminologie verwendet. Die Erfindung lässt sich aber auch auf andere Computernetzwerke anwenden und soll nicht auf das Internet beschränkt sein.

Es werden nun einige in der Erfindungsbeschreibung verwendeten Begriffe näher erläutert:

Als "personenbezogene Registrierungsdaten" sind solche Datensätze bezeichnet, die u. a. Informationen über den Nutzer selbst oder über den von ihm benutzten Client enthalten, die eine Identifikation der Person des Nutzers zu einem späteren Zeitpunkt zweifelsfrei ermöglichen. Zur solchen Daten gehören bspw. Name, Anschrift, Geburtsdatum, Telefonnummern o.ä. "Personenbezogene Registrierungsdaten" sind aber insbesondere Datensätze, die neben den zur Identifikation der Person des Nutzers geeigneten Daten auch noch dafür nicht geeignete Daten enthalten, wie z. B. Interessen oder Hobbys des Nutzers, etc. Letztgenannte Daten werden allgemein auch als soziodemographische Merkmale bezeichnet.

"Anonymisierte Benutzermerkmale" sind ausschließlich solche Daten, anhand derer ein Identifikation der Person des Nutzers nicht möglich ist, und die auch nicht in Verbund mit zur Personenidentifikation geeigneten Daten abgespeichert werden.

Mit der "Adresse des Clients" wird die im Rahmen des Internets bekannte IP-Adresse des Clients bezeichnet (siehe oben). Diese IP-Adresse ist zumindest in jedem von oder an den Client gesendeten Datenpaket enthalten. Über die IP-Adresse besteht die Möglichkeit den Nutzer oder zumindest den von ihm benutzten Client eindeutig zu identifizieren. Sofern sie jedoch nicht im Zusammenhang mit anonymisierten Benutzermerkmalen verarbeitet oder gar gespeichert wird, kann sie im Sinne dieser Anmeldung nicht zur Identifikation der Person des Nutzers anhand der anonymisierten Benutzermerkmale dienen.

Unter dem Begriff "Anonymisierungseinheit" wird ein IP-Anonymizer verstanden. Ein solcher IP-Anonymizer kann in den Kommunikationspfad zwischen zwei ans Internet angeschlossene Rechnereinheiten geschaltet werden und ermöglicht die Kommunikation zwischen der ersten Rechnereinheit und der zweiten Rechnereinheit, ohne dass der zweiten Rechnereinheit die IP-Adresse der ersten Rechnereinheit bekannt sein müsste. Der IP-Anonymizer kann die Adresse der ersten Rechnereinheit durch einen Zahlenschlüssel ersetzen, der für sich genommen keine Rückschlüsse auf die Adresse der ersten Rechnereinheit zulässt, und leitet Datenpakete von der ersten zur zweiten Rechnereinheit mit diesem Schlüssel, jedoch ohne die IP-Adresse der ersten Rechnereinheit weiter. Die zweite Rechnereinheit sendet ihre Datenpakete mit dem empfangenen Schlüssel an den IP-Anonymizer, der diese dann an die dem Schlüssel zugehörige Adresse der ersten Rechnereinheit weiterleitet. Der IP-Anonymizer arbeitet in der Regel aufzeichnungsfrei. Der zweiten Rechnereinheit ist zu keinem Zeitpunkt die Adresse der ersten Rechnereinheit bekannt. Der Begriff "Anonymisierungseinheit" umfasst auch die Möglichkeit, dass jeweils eine Verbindung zwischen der Anonymisierungseinheit und der ersten, sowie eine Verbindung zwischen der Anonymisierungseinheit und der zweiten Rechnereinheit aufgebaut und aufrecht gehalten wird. Datenpakete, die über eine der beiden Verbindungen von der Anonymisierungseinheit empfangen werden, werden dann über die jeweils andere Verbindung weitergeleitet, wobei jedoch zu keinem Zeitpunkt die IP-Adresse der ersten Rechnereinheit an die zweite Rechnereinheit übermittelt wird. Die Anonymisierungseinheit trennt die IP-Adresse der ersten Rechnereinheit vielmehr von den von der ersten Rechnereinheit empfangenen Datenpaketen. Indem die Anonymisierungseinheit von der zweiten Rechnereinheit empfangende Datenpakete über die Verbindung zur ersten Rechnereinheit weiterleitet, findet im Sinne dieser Erfindung eine Zuordnung zur IP-Adresse der ersten Rechnereinheit statt.

"Aufzeichnungsfrei" im Sinne dieser Anmeldung bedeutet, dass die entsprechend bezeichnete Einheit keine Daten über einen Vorgang speichert, die den Vorgang im Nachhinein nachvollziehbar macht. Ein einmal durchgeführter Vorgang hinterlässt also keine Spuren über seinen Inhalt. Ausgenommen hiervon sind statistische Erhebungen, wie z. B. die Anzahl der durchgeführten Vorgänge, die jedoch keinen Rückschluss auf den Inhalt jedes einzelnen Vorgangs erlauben.

Durch die Erfindung wird erreicht, dass aus im Rahmen eines Registrierungsvorgangs bei einem Dienst eines ersten Anbieters erhobenen personenbezogenen Registrierungsdaten anonymisierte Benutzermerkmale gewonnen und dann einem zweiten Anbieter zur Verfügung gestellt werden können, ohne dass datenschutzrechtliche Bedenken bestehen.

Nach der Eingabe der für die Registrierung notwendigen personenbezogenen Registrierungsdaten durch einen Benutzer auf einem Client, werden diese personenbezogenen Benutzerdaten an einen Server des ersten Anbieters gesendet und dort auf gewohnte Weise verarbeitet und abgespeichert. Zusätzlich werden die personenbezogenen Benutzerdaten vom Server des ersten Anbieters an eine erste Anonymisierungseinheit gesendet. Dabei können die personenbezogenen Registrierungsdaten zusammen mit der Adresse des Clients direkt an die Anonymisierungseinheit geschickt werden. Es ist aber besonders bevorzugt, wenn der Server des ersten Anbieters die personenbezogenen Registrierungsdaten an den Client sendet, von wo aus sie an der ersten Anonymisierungseinheit weitergeleitet werden. Dies bietet den Vorteil, dass die bei der ersten Anonymisierungseinheit eintreffenden Daten die Adresse des Servers des ersten Anbieters nicht mehr enthalten und so bereits bei der ersten Anonymisierungseinheit die Herkunft der personenbezogenen Registrierungsdaten nicht mehr feststellbar ist. So können Rückschlussmöglichkeiten auf persönliche Umstände des Nutzers - nämlich die, welche Dienste er in Anspruch nimmt - bereits in diesem frühen Stadium des Verfahrens ausgeschlossen werden. Allerdings sind aufgrund der Adresse des Clients, die zusammen mit den personenbezogenen Registrierungsdaten von der ersten Anonymisierungseinheit empfangen werden, Rückschlüsse auf den Client bzw. dessen Nutzer möglich. Um solche Rückschlüsse ausschließen zu können, werden die personenbezogenen Registrierungsdaten von der Adresse des Clients getrennt. Von der ersten Anonymisierungseinheit werden die personenbezogenen Registrierungsdaten ohne die Adresse des Clients an eine Profilanonymisierungseinheit weitergeleitet. Durch die Profilanonymisierungseinheit werden aus den personenbezogenen Registrierungsdaten anonymisierte Benutzermerkmale erzeugt. Dies kann durch Auslassung mit personenbezogener Daten, wie z. B. dem Namen, oder durch Verallgemeinerung von Daten erfolgen, wie z. B. des Erzeugens eines Benutzermerkmals bezüglich der Generationszugehörigkeit des Nutzers anhand seines Geburtsdatums. Nicht zur Identifikation der Person des Nutzers geeignete Informationen können direkt in die anonymisierten Benutzermerkmale übernommen werden. Dazu gehören bspw. Geschlecht oder Interessen.

Die Profilanonymisierungseinheit arbeitet aufzeichnungsfrei. Nach Erstellung der anonymisierten Benutzermerkmale wird der Ausgangsdatensatz der personenbezogenen Registrierungsdaten gelöscht und es besteht seitens der Profilanonymisierungseinheit keine Möglichkeit, aus dem erstellten Datensatz mit anonymisierten Benutzermerkmalen Rückschlüsse auf die zur Identifikation des Nutzers geeigneten Daten des ursprünglichen Datensatzes mit personenbezogenen Registrierungsdaten zu ziehen. Die anonymisierten Benutzermerkmale werden dann an die erste Anonymisierungseinheit zurückgesandt, wo sie der Adresse des Clients zugeordnet werden.

Die anonymisierten Benutzermerkmale werden anschließend zusammen mit der Adresse des Clients an eine zweite Anonymisierungseinheit gesendet. Besonders bevorzugt ist es, wenn die anonymisierten Benutzermerkmale zunächst an den Client gesandt werden, von wo aus sie an die zweite Anonymisierungseinheit weitergeleitet werden. Dadurch wird sichergestellt, dass die zweite Anonymisierungseinheit über keinerlei Informationen - insbesondere der Adresse - der ersten Anonymisierungseinheit verfügt. Somit kann bei der zweiten Anonymisierungseinheit auch kein Rückschluss auf die verwendete Profilanonymisierungseinheit gezogen werden. Es ist aber auch möglich, dass die zweite Anonymisierungseinheit gleich der ersten Anonymisierungseinheit ist. Durch die zweite Anonymisierungseinheit werden die anonymisierten Benutzermerkmale von der Adresse des Clients getrennt. Mögliche Rückschlüsse auf den zu anonymisierten Benutzermerkmalen jeweils gehörigen Client bzw. dessen Nutzer werden so ausgeschlossen.

Von der zweiten Anonymisierungseinheit werden die anonymisierten Benutzermerkmale an einen Server des zweiten Anbieters gesendet, wo sie gespeichert und auf herkömmliche Weise für die Erstellung eines Interessenprofils und die Platzierung nutzerspezifischer Werbung verwendet werden können. Um die Benutzermerkmale dem Benutzer, zumindest jedoch dem Client des Nutzers zuzuordnen, wird ein Cookie mit einer zufällig generierten ID erstellt und über die zweite Anonymisierungseinheit an den Client gesendet und dort abgespeichert. Über diesen Cookie ist es dem zweiten Anbieter möglich den Client eines Nutzers den anonymisierten Benutzermerkmalen zuzuordnen, ohne dass ihm Rückschlüsse auf die Identität der Person des Nutzers oder die Adresse seines Clients möglich wären.

Es ist besonders bevorzugt, wenn der Server des zweiten Anbieters zusammen mit anonymisierten Benutzermerkmalen auch noch einen bereits auf dem Client des Nutzers abgespeicherten Cookie erhält. Auf diese Weise können für einen Nutzer bereits vorhandene anonymisierte Benutzermerkmale lediglich aktualisiert oder verifiziert werden und es muss kein neuer Cookie bzw. keine neue ID erstellt werden.

Es ist besonders bevorzugt, wenn der Server des ersten Anbieters die personenbezogenen Registrierungsdaten nicht nur nach der eigentlichen Registrierung des Nutzers, sondern nach jeder erfolgreichen Anmeldung des Nutzers beim entsprechenden Dienst des ersten Anbieters gemäß dem beschriebenen Verfahren weiterleitet. Dadurch wird erreicht, dass für einen Nutzer, dessen anonymisierte Benutzermerkmale auf dem Server des zweiten Anbieters z.B. aufgrund der Löschung der Cookies auf dem Client nicht mehr zugeordnet werden können, ein neuer Datensatz auf dem Server des zweiten Anbieters angelegt und dem Client eine neue ID bzw. ein Cookie zugeordnet werden kann.

Es ist weiterhin bevorzugt, wenn die erste Anonymisierungseinheit aus der Adresse des Clients anonymisierte Benutzermerkmale gewinnt, die dann den weiteren anonymisierten Benutzermerkmalen zugeschlagen werden. Über die Adresse, insbesondere die IP-Adresse im Internet, kann der Standort des Nutzers nämlich zumindest auf eine Region, bei entsprechender Infrastruktur sogar auf eine Stadt eingegrenzt werden. In der IP-Adresse des Nutzers ist häufig die Adresse des von ihm genutzten und ihm naheliegenden Einwahlknoten enthalten. Über diese Information kann sein ungefährer Standort ermittelt werden.

Die Erfindung wird nun anhand einer bevorzugten Ausführungsform näher erläutert. Es zeigen:
- Fig. 1: eine beispielhafte schematische Darstellung der Durchführung des erfindungsgemäßen Verfahrens auf einer erfindungsgemäßen Anordnung; und
- Fig. 2: beispielhafte Datensätze für personenbezogene Registrierungsdaten und anonymisierte Benutzermerkmale.

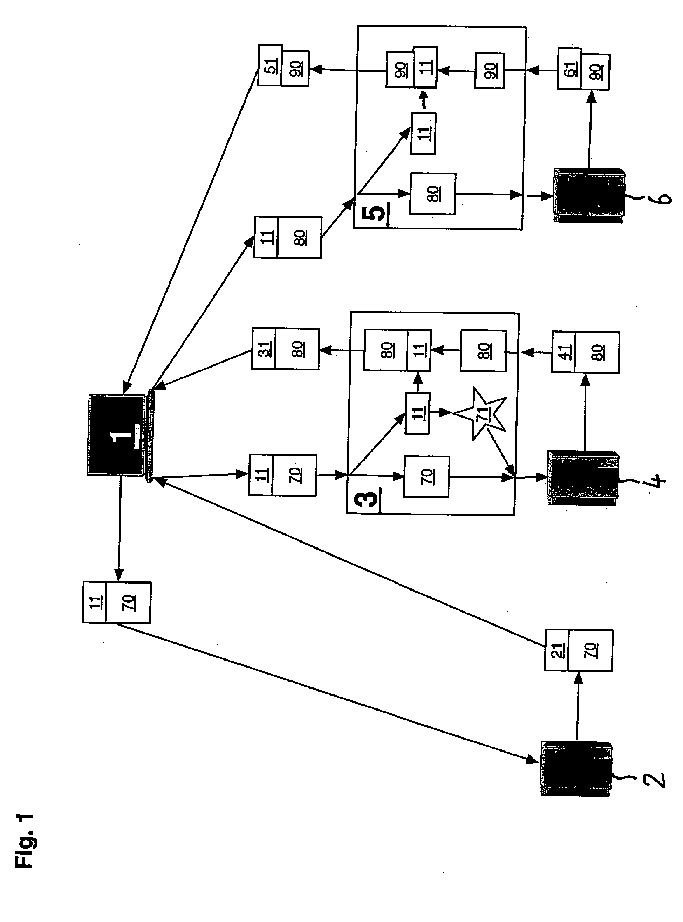

Das Ausführungsbeispiel in Fig. 1 umfasst einen Client 1, der mit einem nicht mehr dargestellten Computernetzwerk verbunden ist. Innerhalb dieses Netzwerkes weist der Client eine Adresse 11 auf. Sofern es sich bei dem Netzwerk um das Internet handelt, ist die Adresse 11 einer IP-Adresse, die statisch oder dynamisch vergeben werden kann. Der Client 1 ist zur Eingabe von personenbezogenen Registrierungsdaten 70 geeignet. Der Nutzer des Clients 1 kann beispielsweise durch ein von ihm über das Netzwerk aufgerufenen Dienst zur Eingabe solcher personenbezogenen Registrierungsdaten 70 aufgefordert werden.

Sobald die Eingabe der personenbezogenen Nutzerdaten 70 auf dem Client 1 beendet ist, werden die personenbezogenen Registrierungsdaten 70 zusammen mit der Adresse 11 des Clients an einen Server 2 gesendet. Der Server 2 ist dabei in der Regel dem Anbieter zugeordnet, der auch den Dienst, für den der Benutzer seine personenbezogenen Registrierungsdaten 70 eingegeben hat, anbietet. Die personenbezogenen Registrierungsdaten 70 werden auf dem Server 2 abgespeichert und können für den anmeldepflichtigen Dienst verwendet werden.

Daneben werden die personenbezogenen Registrierungsdaten 70 an den Client 1 zurückgesendet. Die entsprechenden Datenpakete, die übers Netzwerk geschickt werden, tragen als Absender die Adresse 21 des Servers 2.

Nach dem Empfang der personenbezogenen Benutzerdaten vom Server 2 seitens des Clients 1 werden die personenbezogenen Benutzerdaten 70 an eine erste Anonymisierungseinheit 3 weitergeleitet. Die von dem Client 1 an die erste Anonymisierungseinheit 3 gesendeten Datenpakete tragen als Absender nunmehr die Adresse 11 des Clients 1, und nicht die Adresse 21 des Servers 2. An den von der ersten Anonymisierungseinheit 3 empfangenen Datenpaketen lässt sich bereits nicht mehr ablesen, von welchem Server 2 die personenbezogenen Registrierungsdaten 70 stammen.

In der ersten Anonymisierungseinheit 3 wird die Adresse 11 des Clients 1 von den personenbezogenen Registrierungsdaten 70 getrennt. Die erste Anonymisierungseinheit 3 kann dazu ausgebildet sein, aus der Adresse 11 des Clients 1 anonyme Zusatzinformationen 71 zu gewinnen. Bei diesen Zusatzinformationen 71 kann es sich bspw. um den ungefähren Standort des Clients 1 handeln. Im Internet lassen sich nämlich z. B. anhand der IP-Adressen die Standorte der Einwahlknoten, über die ein Client 1 mit dem Internet verbunden ist, feststellen. Anhand dieser Information, lässt sich der Standort des Clients 1 in einer regionalen Auflösung, bei entsprechender Infrastruktur sogar der Stadt nach bestimmen.

Die personenbezogenen Registrierungsdaten 70 und ggf. dazu gehörige anonyme Zusatzinformation 71 werden zu einer Profilanonymisierungseinheit 4 weitergeleitet. Da die Adresse 11 des Clients 1 von den personenbezogenen Registrierungsdaten 70 und den anonymen Zusatzinformationen 71 getrennt ist, besteht seitens der Profilanonymisierungseinheit 4 keine Möglichkeit, die Herkunft der personenbezogenen Registrierungsdaten 70 von dem Client 1 zu bestimmen.

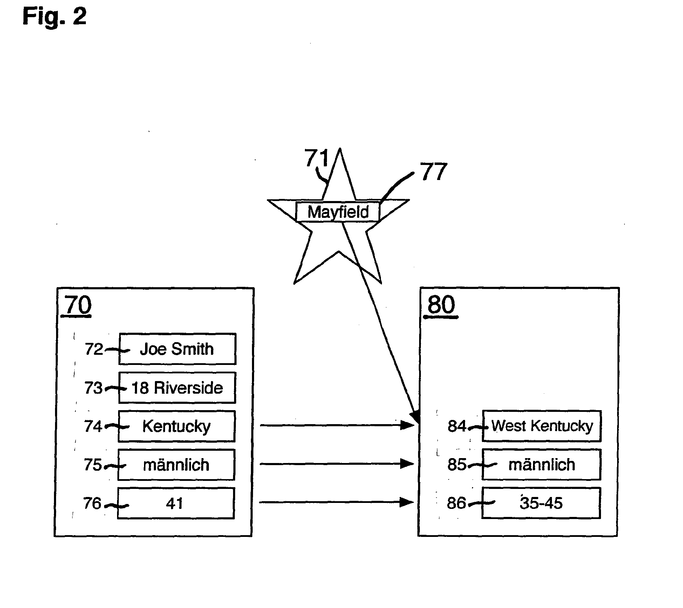

In der Profilanonymisierungseinheit werden die personenbezogenen Registrierungsdaten 70 in anonymisierte Benutzermerkmale 80 gewandelt. Dieser, anhand Fig. 2 weiter unten noch näher beleuchtete Vorgang, entfernt aus den personenbezogenen Registrierungsdaten 70 jene Daten, die zur Identifikation der Person des Benutzers geeignet sind. Die dabei entstehenden anonymisierten Benutzermerkmale 80 können nicht zur Identifikation der Person des Benutzers herangezogen werden, sondern enthalten lediglich dazu untauglich Daten, wie z. B. Interessen oder Hobbys bzw. allgemeine soziodemographische Merkmale.

Die Profilanonymisierungseinheit arbeitet aufzeichnungsfrei. Nach dem aus personenbezogenen Registrierungsdaten 70 anonymisierte Benutzermerkmale 80 gewonnen wurden, werden die personenbezogenen Registrierungsdaten 70 vollständig gelöscht. Anhand anonymisierter Benutzermerkmale 80 kann also seitens der Profilanonymisierungseinheit 4 nicht auf die zugrunde liegenden personenbezogenen Registrierungsdaten 70 rückgeschlossen werden.

Die anonymisierten Benutzermerkmale 80 werden zusammen mit der Adresse 41 der Profilanonymisierungseinheit 4 an die erste Anonymisierungseinheit 3 zurückgesandt. In der Anonymisierungseinheit 3 werden die anonymisierten Benutzermerkmale 80 wieder der Adresse 11 des Clients zugeordnet. Entsprechende Techniken hierfür sind bekannt. So werden bspw. im Internet bereits sog. Anonymizer verwendet.

Die anonymisierten Benutzermerkmale 80 werden an den Client 1 gesandt. Dabei dient die Adresse 31 der ersten Anonymisierungseinheit 3 als Absenderadresse. Die so empfangenen anonymisierten Benutzermerkmale 80 werden dann vom Client 1 an eine zweite Anonymisierungseinheit 5 weitergeleitet. Die Weiterleitung durch den Client 1 bietet den Vorteil, dass die von der zweiten Anonymisierungseinheit 5 empfangenen anonymisierten Benutzermerkmale 80 lediglich mit der Adresse 11 des Clients 1 als Absenderadresse empfangen werden. Bereits durch die zweite Anonymisierungseinheit 5 lässt sich nicht mehr unmittelbar feststellen, von welcher ersten Anonymisierungseinheit 3, geschweige dann von welcher Profilanonymisierungseinheit 4 die empfangenen Daten stammen.

In der zweiten Anonymisierungseinheit 5 werden die anonymisierten Benutzermerkmale 80 von der Adresse 11 des Clients 1 getrennt und lediglich die anonymisierten Benutzermerkmale 80 werden an den Server 6 weitergeleitet. Auf dem Server 6 können die anonymisierten Benutzermerkmale 80 abgespeichert werden.

Um die abgespeicherten anonymisierten Benutzermerkmale 80 zu einem späteren Zeitpunkt dem Client 1 wieder zuordnen zu können, wird ein Cookie 90 mit einer beliebig geformten Identifikationsnummer (ID) erzeugt, wobei weder der Cookie noch die ID weitere Merkmale des Nutzers enthalten. Dieser Cookie 90 wird in der zweiten Anonymisierungseinheit 5 der Adresse 11 des Clients 1 zugeordnet, an diesen gesandt und dort abgespeichert.

Sollten die abgespeicherten anonymisierten Benutzermerkmale 80 zu einem späteren Zeitpunkt abgefragt werden, so ist es ausreichend dem Server 6 die ID aus dem Cookie 90 zu übermitteln. Eine Übermittlung der Adresse 11 des Clients 1 ist nicht erforderlich und aus Gründen des Datenschutzes auch nicht erwünscht. Um eine Übermittlung der Adresse 11 des Clients 1 an den Server 6 unter allen Umständen zu unterbinden, kann eine entsprechend ausgebildete Anonymisierungseinheit ähnlich der zweiten Anonymisierungseinheit 5 vorgesehen sein.

Um zu vermeiden, dass für einen Benutzer auf dem Server 6 mehrere Datensätze mit anonymisierten Beutzermerkmalen 80 angelegt werden, kann vorgesehen sein, vor dem Anlegen eines neuen entsprechenden Datensatzes zu überprüfen, ob auf dem Client 1 bereits ein Cookie 90 abgespeichert ist. Sollte dies der Fall sein, kann der durch die in Cookie 90 gespeicherte Identifikationsnummer der zum Benutzer gehörigen Datensatz ermittelt werden und durch die neu empfangenen anonymisierten Benutzermerkmale 80 verifiziert oder aktualisiert werden.

In Fig. 2 ist dargestellt, wie die Profilanonymisierungseinheit 4 aus personenbezogenen Registrierungsdaten 70 und ggf. anonymen Zusatzdaten 71 anonymisierte Benutzermerkmale 80 erstellt.

Im dargestellten Beispiel umfasst ein Datensatz mit personenbezogenen Registrierungsdaten 70 Datenfelder 72-76 für Name (Feld 72), Strasse (Feld 73), Bundesstaat (Feld 74), Geschlecht (Feld 75) und Alter (Feld 76). Außerdem stehen der Profilanonymisierungseinheit 5 noch Zusatzinformationen 71 durch die erste Anonymisierungseinheit 3 zur Verfügung. In diesem Fall beschränken sich die Zusatzinformationen 71 auf Daten 77 über den regionalen Standort des Clients 1.

Bei der Übertragung von personenbezogenen Registrierungsdaten 70 in anonymisierte Benutzermerkmale 80 werden solche Daten, die zur Identifikation der Person des Benutzers verwendet werden können, von vornherein ausgeschlossen. In diesem Beispiel werden die Daten aus den Feldern 72 und 73, d. h. die Namen sowie die Strasse, nicht übernommen. Andere Daten, die nicht zur Identifikation der Person des Benutzers dienen, da die entsprechenden Merkmale auf einer Vielzahl von Personen zutreffen, können allerdings direkt übernommen werden. Dazu gehören bspw. die Daten aus den Feldern 74 und 75, nämlich der Bundesstaat und das Geschlecht (vgl. Felder 84 und 85 der anonymisierten Benutzermerkmale 80). Für eine dritte Gruppe von Daten kann es gewünscht oder von Nöten sein, die Daten zu verallgemeinern. In dem dargestellten Beispiel werden so bspw. die Daten über das Alter des Nutzers aus Feld 76 verallgemeinert indem die konkrete Altersangabe in eine Generationenangabe gewandelt wird (vgl. Feld 86 der anonymisierten Benutzermerkmale 80).

Die aus den anonymen zusätzlichen Informationen 71 erhaltenen Daten können entweder zur Verifikation der bereits aus den personenbezogenen Registrierungsdaten 70 oder zur näheren Spezifikation dieser Daten verwendet werden. In dem dargestellten Beispiel kann so der durch die erste Anonymisierungseinheit 3 erlangte Information über den ungefähren Standort des Clients dazu verwendet werden, die Region, in der sich der Benutzer aufhält, näher zu begrenzen. Letzteres kann gerade dann von Bedeutung sein, wenn die auf dem Server 6 abgespeicherten Benutzermerkmale 80 zur Steuerung von nutzerspezifischer Werbung verwendet werden. Anhand der anonymisierten Benutzermerkmale 80 ist es möglich, dem Nutzer nur solche Werbung, Produktempfehlungen oder redaktionelle Inhalte zu präsentieren, die seiner Interessenlage entspricht und ggf. auch regional auf ihn abgestimmt ist.

## Patentansprüche

1. Verfahren zur Gewinnung von anonymisierten Benutzermerkmalen (80) für einen zweiten Anbieter aus personenbezogenen Registrierungsdaten (70) bei einem ersten Anbieter in einem Computernetzwerk, **gekennzeichnet durch** die folgenden Schritte:
a) ein Server (2) des ersten Anbieters empfängt von einem Nutzer an einem Client (1) erstellte personenbezogene Registrierungsdaten (70) zusammen mit der Adresse (11) des Clients (1);
b) die personenbezogenen Registrierungsdaten (70) werden **durch** eine erste Anonymisierungseinheit (3) eines weiteren Anbieters von der Adresse (11) des Clients (1) getrennt;
c) die personenbezogenen Registrierungsdaten (70) werden **durch** eine Profilanonymisierungseinheit (4) eines weiteren Anbieters in anonymisierte Benutzermerkmale (80) gewandelt;
d) die anonymisierten Benutzermerkmale (80) werden **durch** die erste Anonymisierungseinheit (3) der Adresse (11) des Clients (1) zugeordnet;
e) die anonymisierten Benutzermerkmale (80) werden **durch** eine zweite Anonymisierungseinheit (5) eines weiteren Anbieters von der Adresse (11) des Clients (1) getrennt;
f) die anonymisierten Benutzermerkmale (80) werden auf einem Server (6) des zweiten Anbieters zusammen mit einer ID gespeichert; und
g) ein aus der ID generierter Cookie (90) wird **durch** die zweite Anonymisierungseinheit (5) der Adresse (11) des Clients (1) zugeordnet, an den Client (1) gesendet und dort abgespeichert.

2. Verfahren nach Anspruch 1, **dadurch gekennzeichnet, dass** die Übertragung der personenbezogenen Registrierungsdaten (70) vom Server (2) des ersten Anbieters zur ersten Anonymisierungseinheit (3) die folgenden Schritte umfasst:
a) Übertragen der personenbezogenen Anmeldedaten (70) vom Server (2) des ersten Anbieters zum Client (1); und
b) Übertragen der personenbezogenen Registrierungsdaten (70) sowie der Adresse (11) des Clients (1) vom Client (1) zur ersten Anonymisierungseinheit (3).

3. Verfahren nach Anspruch 1 oder 2, **dadurch gekennzeichnet, dass** die Übermittlung der anonymisierten Benutzermerkmale (80) von der ersten zur zweiten Anonymisierungseinheit (3, 5) die folgenden Schritte umfasst:
a) Übertragen der anonymisierten Benutzermerkmale (80) von der ersten Anonymisierungseinheit (3) zum Client (1); und
b) Übertragen der anonymisierten Benutzermerkmale (80) sowie der Adresse (11) des Clients (1) vom Client (1) zur zweiten Anonymisierungseinheit (5).

4. Verfahren nach Anspruch 1, 2 oder 3, **dadurch gekennzeichnet, dass** die erste Anonymisierungseinheit (3) aus der Adresse (11) des Clients (1) anonyme Zusatzinformationen (71) gewinnt, die zu den personenbezogenen Registrierungsdaten und/oder den anonymisierten Benutermerkmalen hinzugefügt werden.

5. Verfahren nach einem der vorangehenden Ansprüche, **dadurch gekennzeichnet, dass** die Profilanonymisierungseinheit (4) aufzeichnungsfrei arbeitet.

6. Verfahren nach einem der vorangehenden Ansprüche, **dadurch gekennzeichnet, dass** der Client (1) ein auf dem Client (1) bereits abgespeicherten Cookie (90) über die zweite Anonymisierungseinheit (5) an den Server (6) des zweiten Anbieters sendet, dessen enthaltene Identifikationsnummer dann dem zum Client (1) gehörigen anonymisierten Benutzermerkmale (80) zugeordnet wird.

7. Anordnung zur Gewinnung von anonymisierten Benutzermerkmalen (80) für einen zweiten Anbieter aus personenbezogenen Registrierungsdaten (70) bei einem ersten Anbieter in einem Computernetzwerk, umfassend einen Client (1), einen Server (2) des ersten Anbieters, wenigstens eine Anonymisierungseinheit (3, 5) wenigstens eines weiteren Anbieters, eine Profilanonymisierungseinheit (4), und einen Server (6) des zweiten Anbieters, die über ein Computernetzwerk miteinander verbunden sind, **dadurch gekennzeichnet, dass**
a) der Server (2) des ersten Anbieters zum Empfang von einem Nutzer an dem Client (1) angegebenen personenbezogenen Registrierungsdaten (70) zusammen mit der Adresse (11) des Clients (1) ausgebildet ist;
b) wenigstens eine Anonymisierungseinheit (3, 5) zur Trennung der personenbezogenen Registrierungsdaten (70) von der Adresse (11) des Clients (1) und zur späteren Zuordnung der aus dem personenbezogenen Registrierungsdaten (70) erzeugten anonymisierten Benutzermerkmale (80) zur Adresse (11) des Clients (1) ausgebildet ist;
c) die Profilanonymisierungseinheit (4) zur Umwandlung der personenbezogenen Registrierungsdaten (70) in anonymisierte Benutzermerkmale (80) ausgebildet ist;
d) die wenigstens eine Anonymisierungseinheit (3, 5) zur Trennung der anonymisierten Benutzermerkmale (80) von der Adresse (11) des Clients (1) zur späteren Zuordnung eines den anonymisierten Benutzermerkmalen (80) zugeordneten Cookies (90) mit einer ID zur Adresse (11) des Clients (1) ausgebildet ist;
e) der Server (6) des zweiten Anbieters zur Speicherung der anonymisierten Benutzermerkmale (80) und zur Zuordnung eines Cookies (90) mit einer ID zu den gespeicherten anonymisierten Benutzermerkmalen (80) ausgebildet ist; und
f) der Client (1) zur Eingabe personenbezogenen Registrierungsdaten (70) und zum Speichern und Senden von Cookies (90) ausgebildet ist.

8. Anordnung nach Anspruch 7, **dadurch gekennzeichnet, dass** die Anonymisierungseinheit (3, 5) gemäß Merkmal b) getrennt von der Anonymisierungseinheit (5, 3) gemäß Merkmal d) ausgebildet ist.

9. Anordnung nach Anspruch 7 oder 8, **dadurch gekennzeichnet, dass** die Anonymisierungseinheit (3, 5) gemäß Merkmal b) zur Gewinnung von anonymen Zusatzinformationen (71) aus der Adresse (11) des Clients (1) ausgebildet ist.

10. Anordnung nach einem der Ansprüche 7 bis 9, **dadurch gekennzeichnet, dass** die Profilanonymisierungseinheit (4) aufzeichnungsfrei ist.
